# EUROPÄISCHE PATENTSCHRIFT

(11) **EP 3 445 513 B1**
(45) Veröffentlichungstag und Bekanntmachung des Hinweises auf die Patenterteilung: **30.11.2022**
(21) Anmeldenummer: 17711154.9
(22) Anmeldetag: 16.03.2017
(51) Int. Cl.: B21H 3/02, F16B 25/00

(54) **VERFAHREN ZUR HERSTELLUNG EINES SCHRAUBANKERS MIT EINEM METRISCHEN ANSCHLUSSGEWINDE**
METHOD FOR PRODUCING A SCREW ANCHOR COMPRISING A METRIC CONNECTION THREAD
PROCÉDÉ DE FABRICATION D'UNE VIS D'ANCRAGE MUNIE D'UN FILETAGE DE RACCORDEMENT MÉTRIQUE

(30) Priorität: 24.03.2016 DE 102016105622
(43) Veröffentlichungstag der Anmeldung: 27.02.2019
(73) Patentinhaber: Ludwig Hettich Holding GmbH & Co. KG, 78713 Schramberg-Sulgen (DE)
(72) Erfinder: HETTICH, Ulrich, 78713 Schramberg (DE); HETTICH, Stefan, 78713 Schramberg (DE)
(74) Vertreter: Lucke, Andreas
(86) Internationale Anmeldenummer: PCT/EP2017/056209
(87) Internationale Veröffentlichungsnummer: WO 2017/162508

(56) Entgegenhaltungen:
- EP-A1- 1 219 840
- WO-A1-2007/012417
- WO-A1-2012/084388
- US-A- 5 531 553

## Beschreibung

### GEBIET DER ERFINDUNG

Die vorliegende Erfindung liegt auf dem Gebiet der Verankerungstechnik. Insbesondere betrifft sie ein Verfahren zur Herstellung eines Schraubankers mit einem metrischen Anschlussgewinde, sowie einen zugehörigen Schraubanker.

### HINTERGRUND UND STAND DER TECHNIK

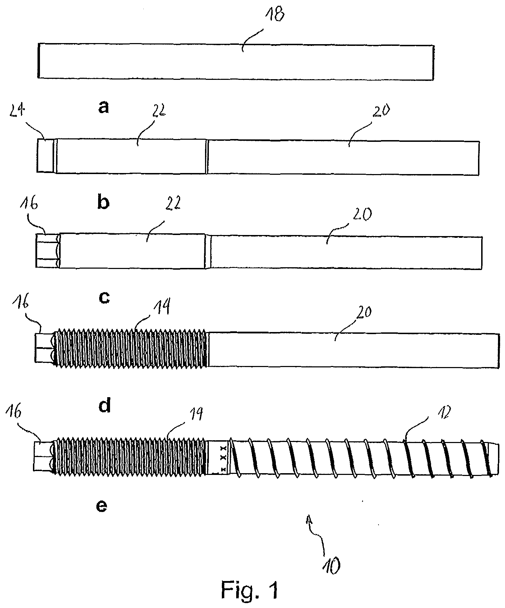

Im Stand der Technik sind Schraubanker bekannt, die ein Verankerungsgewinde, welches zum direkten Einschrauben in Beton, Stein oder Mauerwerk geeignet ist, ein metrisches Anschlussgewinde und einen Kraftangriff umfassen. Das "Verankerungsgewinde" kann hierin auch kurz als "Betongewinde" bezeichnet werden. Der Begriff "direktes Einschrauben" weist darauf hin, dass das Gewinde direkt in den Beton oder Ähnliches schneidet, ohne Verwendung eines Dübels. Ein solcher Schraubanker 10 ist in Fig. 1e gezeigt. Wie Fig. 1e zu entnehmen ist, weist der Schraubanker 10 ein Verankerungsgewinde 12, ein metrisches Anschlussgewinde 14 und einen Kraftangriff 16, in diesem Fall einen Sechskant-Kraftangriff auf. Ferner zeigen Fig. 1a bis 1e Fertigungsschritte im Rahmen der Herstellung eines derartigen Schraubankers 10.

In Fig. 1a wird ein zylindrischer Rohling 18 durch Pressen und Setzen erstellt. Der Rohling 18 wird dann in seinem Durchmesser reduziert, wodurch ein gestufter Rohling 18 gebildet wird, wie er in Fig. 1b gezeigt ist. Dabei ist die Geometrie des gestuften Rohlings 18 so gewählt, dass ein erster Abschnitt 20, an dem das Verankerungsgewinde 12 auszubilden ist, und ein zweiter Abschnitt 14, an dem das metrische Anschlussgewinde 14 auszubilden ist, jeweils einen geeigneten Walzdurchmesser aufweisen. Bei der Verwendung der am Markt standardisierten Bohrdurchmesser für Beton und Nenndurchmesser der metrischen Gewinde ist im Stand der Technik der Walzdurchmesser des ersten Abschnitts 20 geringer als der Walzdurchmesser des zweiten Abschnitts 22. Diese Durchmesserdifferenz wird durch Reduzieren in einem oder mehreren Schritten auf einer Presse bzw. Mehrstufenpresse, d.h. durch Kaltumformung durchgeführt. Um den Kaltumformungsprozess effizient und ohne übermäßige Beanspruchung der Werkzeuge durchführen zu können, wird für den Rohling 18 des Standes der Technik typischerweise ein niedrig gekohlter Stahl mit einem Kohlenstoffgehalt von weniger als 0,45 %, bevorzugt sogar von weniger als 0,25 % verwendet. Wie der Fig. 1b weiter zu entnehmen ist, enthält der gestufte Rohling 18 weiterhin einen Abschnitt 24 mit reduziertem Durchmesser, der zum ausbilden des Kraftangriffs 16 vorgesehen ist.

In einem anschließenden Verfahrensschritt wird der Kraftangriff 16 ebenfalls durch Kaltumformung, typischerweise durch Fließpressen, ausgebildet (Fig. 1c). Nachfolgend werden das metrische Gewinde 14 (Fig. 1d) und das Verankerungsgewinde 12 (Fig. 1e) durch Walzen ausgebildet. Schließlich wird der Schraubanker 10 von Fig. 1e gehärtet. Dazu wird der Schraubanker 10 typischerweise im Zuge einer Wärmebehandlung aufgekohlt, um einen Kohlenstoffgehalt von mehr als 0,65 % zu erhalten, gehärtet und angelassen. Darüber hinaus wird typischerweise das führende Ende des Verankerungsgewindes 12 zusätzlich gehärtet, beispielsweise durch Induktionshärten.

Das beschriebene Fertigungsverfahren aus dem Stand der Technik ist vergleichsweise aufwendig und kostenintensiv.

WO 2007/012417 A1 offenbart einen gewindeschneidenden Betonanker zur selbstfurchenden Verankerung in harten Untergründen wie Beton, Stein, Mauerwerk oder dergleichen. Der Betonanker besitzt einen im wesentlichen zylindrischen Schaft, dessen Kerndurchmesser gestuft ausgebildet ist. Der Schaft weist einen Schneidabschnitt mit einem wendelförmig umlaufenden Schneidgewinde auf, der bezogen auf eine Setzrichtung einen vorderen Schaftabschnitt mit einem ersten Kerndurchmesser bildet. Ein Befestigungsabschnitt erstreckt sich entgegen der Setzrichtung und bildet einen rückwärtigen Schaftabschnitt, der ein Lastangriffsmittel aufweist und einen zweiten Kerndurchmesser aufweist. Ferner ist der Schaft mit einem Angriffsmittel zur Übertragung eines Drehmoment auf den Schaft ausgestattet. Das wendelförmig am vorderen Schaftabschnitt umlaufende Schneidgewinde weist Gewindeflanken auf, die miteinander einen spitzen Winkel einschließen.

US 5,531,553 offenbart eine Mauerwerksbefestigungsvorrichtung, die einen Stahlschaft umfasst, der eine kreiszylindrische Form hat. Eine Steg-Nut-Steg-Konstruktion erstreckt sich schraubenförmig entlang des unteren Abschnitts des Schafts und umfasst ein Paar paralleler, gegenüberliegender Stege, die von einem benachbarten Bereich aufragen. Jeder Steg bildet mit dem benachbarten Steg eine Nut. Zumindest das vordere Ende des unteren Abschnitts des Schafts ist selbstschneidend ausgebildet. Bei der Verwendung wird die Befestigungsvorrichtung in eine vorgebohrte Bohrung in einem Mauerwerk wie z. B. Ziegelmauerwerk eingeführt, indem sie so gedreht wird, dass sie ein Gewinde an der Innenwand der Bohrung bildet. Die axiale Abmessung des Stegs 9 beträgt mindestens 50 % des Rohlingsdurchmessers, so dass sich bei eingesetzter Befestigungsvorrichtung relativ große Mengen an Substratmaterial zwischen der Steg-Nut-Steg-Konfiguration befinden. Dadurch wird eine hohe Auszugsfestigkeit der Befestigungsvorrichtung in Mauerwerkskonstruktionen erreicht.

### KURZBESCHREIBUNG DER ERFINDUNG

Der Erfindung liegt die Aufgabe zugrunde, ein Verfahren zum Herstellen eines Schraubankers anzugeben, welches effizienter und weniger kostintensiv ist.

Diese Aufgabe wird gemäß durch ein Verfahren nach Anspruch 1 gelöst. Vorteilhafte Ausführungsformen sind in den abhängigen Ansprüchen angegeben.

Erfindungsgemäß umfasst das Verfahren zum Herstellen eines Rohlings mit einem Verankerungsgewinde, einem metrischen Anschlussgewinde und einem Kraftangriff die folgenden Schritte:
- Bereitstellen eines Rohlings mit einem ersten Abschnitt, an dem das Verankerungsgewinde auszubilden ist, und einem zweiten Abschnitt, an dem das metrische Anschlussgewinde auszubilden ist,
- Ausbilden des Kraftangriffs,
- Ausbilden des metrischen Gewindes durch Walzen oder Rollen, und
- Ausbilden des Verankerungsgewindes durch Walzen,
wobei der erste Abschnitt vor dem Walzen des Verankerungsgewindes nicht reduziert wird, und wobei das Verankerungsgewinde eine oder mehrere der folgenden Eigenschaften aufweist:
- das Verankerungsgewinde hat in einem radial äußeren Bereich einen ersten Flankenwinkel und in einem radial inneren Bereich einen zweiten Flankenwinkel, wobei der zweite Flankenwinkel größer als der erste Flankenwinkel ist,
- das Verankerungsgewinde hat einen Spitzenradius von mindestens 0,15 mm, vorzugsweise von mindestens 0,18 mm und besonders vorzugsweise von mindestens 0,2 mm,
- das Verankerungsgewinde hat
   - bei einem Nenndurchmesser von 14 mm oder UNF 9/16" eine Höhe von mindestens 1,8 mm, vorzugweise von mindestens 1,9 mm,
   - bei einem Nenndurchmesser von 16 mm oder UNF 5/8" eine Höhe von mindestens 1,9 mm, vorzugweise von mindestens 2,05 mm,
   - bei einem Nenndurchmesser von 20 mm oder UNF 3/4" eine Höhe von mindestens 2,0 mm, vorzugweise von mindestens 2,15 mm,
   - bei einem Nenndurchmesser von 24 mm oder UNF 7/8" eine Höhe von mindestens 2,0 mm, vorzugweise von mindestens 2,2 mm,
   - bei einem Nenndurchmesser von ≥ 30 mm oder von ≥ UNF 11/8" eine Höhe von mindestens 2,2 mm, vorzugweise von mindestens 2,5 mm.

In einer bevorzugten Ausführungsform weist der Rohling einen Kohlenstoffgehalt von mindestens 0,5 %, vorzugsweise von mindestens 0,6 % auf. Ferner wird in dieser bevorzugten Ausführungsform auch der Kraftangriff durch ein spanendes Verfahren, durch ein Fügeverfahren oder durch Warmumformung bei einer Temperatur von mindestens 300 °C, vorzugweise mindestens 350 °C und besonders vorzugweise mindestens 400 °C ausgebildet.

Abweichend vom Herstellungsverfahren des Standes der Technik wird gemäß dieser Ausführungsform ein Rohling bereitgestellt, der bereits einen vergleichsweise hohen Kohlenstoffgehalt hat. Dies bedeutet, dass die oben beschriebene Wärmebehandlung mit Aufkohlen, Härten und Anlassen, die im Stand der Technik nach dem Walzen des metrischen Gewindes und des Verankerungsgewindes durchgeführt wird, weggelassen werden kann, wodurch der Herstellungsprozess wesentlich schneller und preisgünstiger wird. Bei einem derart hohen Kohlenstoffgehalt ist aber das Ausbilden des Kraftangriffs durch Kaltumformung wesentlich schwieriger, und führt typischerweise zu einem übermäßigen Verschleiß der zugehörigen Werkzeuge. Gemäß dieser Ausführungsform wird daher der Kraftangriff nicht durch Kaltumformung ausgebildet, sondern durch ein spannendes Verfahren, durch ein Fügeverfahren, beispielsweise Schweißen, oder durch Warmumformung bei einer Temperatur von mindestens 300 °C, vorzugweise mindestens 350 °C und besonders vorzugweise mindestens 400 °C, beispielsweise durch Schmieden. Insgesamt lässt sich mit dem erfindungsgemäßen Verfahren der Herstellungsprozess wesentlich vereinfachen und beschleunigen.

In einer vorteilhaften Ausführungsform wird der Kraftangriff durch Polygondrehen, insbesondere durch Sechskantschlagen ausgebildet. Das Polygondrehen ist ein Beispiel des oben genannten spanenden Verfahrens. Es gestattet eine schnelle Ausbildung des Kraftangriffs selbst bei vergleichsweise hochkohligem Stahl. Tatsächlich hat sich herausgestellt, dass speziell bei größeren Längen des Schraubankers die Ausbildung des Kraftangriffs durch ein spanendes Verfahren, speziell Polygondrehen schneller und effizienter ist, als das übliche Kaltumformen, bei dem der Schraubanker mit seiner gesamten Länge in einer zugehörigen Presse aufgenommen werden muss. Bei längeren Schraubankern, beispielsweise solche mit einer Länge von 200 mm oder mehr, kommen daher sehr große, langhubige Pressen zum Einsatz, die typischerweise eine niedrige Stückleistung haben. Diese Probleme lassen sich bei Verwendung eines spanenden Verfahrens, insbesondere Polygondrehen vermeiden.

In bevorzugten Ausführungsformen wird der erste Abschnitt nach dem Walzen des Verankerungsgewindes nicht gehärtet und angelassen, wie dies beim oben beschriebene Stand der Technik gemäß Fig.1 der Fall ist. Dies wird dadurch ermöglicht, dass gemäß diesem Aspekt der Erfindung bereits der verwendete Rohling einen vergleichweise hohen Kohlenstoffgehalt von mindestens 0,5 %, vorzugsweise von mindestens 0,6 % aufweist. Vorzugsweise wird der erste Abschnitt nach dem Walzen des Verankerungsgewindes nicht über seine gesamte Länge gehärtet. Es ist jedoch möglich, dass ausschließlich das führende Ende des Verankerungsgewindes gehärtet wird, insbesondere durch Induktionshärten. Dabei wird im Bereich des führenden Endes des Verankerungsgewindes vorzugsweise eine Härte von mindestens 60 HRC erreicht, die die zu einem vergleichsweise geringen Verschleißwiderstand führt.

Vorzugsweise wird das metrische Gewinde durch Rollen ausgebildet. Dabei wird das Ausbilden des Kraftangriffs und das Ausbilden des metrischen Gewindes jeweils auf einer CNC-Maschine, vorzugsweise auf derselben CNC-Maschine ausgeführt. Auf diese Weise können der Kraftangriff und das metrische Gewinde rasch und kostengünstig ausgebildet werden.

Das erfindungsgemäße Verfahren erweist sich als besonders vorteilhaft für Schraubanker mit einer Länge von mindestens 200 mm, vorzugsweise von mindestens 250 mm und besonders vorzugsweise von mindestens 300 mm. Bei derart großen Längen kommen die Vorteile gegenüber herkömmlichen Verfahren, bei denen der Kraftangriff durch Kaltumformung unter Verwendung entsprechend langhubiger Pressen ausgebildet wird, besonders zum Tragen.

In einer vorteilhaften Ausführungsform weist das metrische Gewinde einen Nenndurchmesser nach DIN 13 ≥ 14 mm auf. Ähnlich wie bei der Länge kommen auch im Hinblick auf den Durchmesser die Vorteile Erfindung besonders bei größeren Durchmessern zum Tragen. Dies liegt unter anderem daran, dass Schraubanker mit höheren Durchmessern auch ohne zusätzliche Wärmebehandlung leichter den erforderlichen Eindrehmomenten standhalten. Man beachte, dass bei den bevorzugten Ausführungsformen der Nenndurchmesser des metrischen Gewindes und des Verankerungsgewindes identisch sind. Während jedoch der "Nenndurchmesser" bei einem metrischen Gewinde sehr präzise definiert ist, trifft dasselbe für das Verankerungsgewinde, also beispielsweise ein Betongewinde, nicht im selben Maße zu. Während beispielsweise ein "Nenndurchmesser" von 20 mm bei einem metrischen Gewinde bedeutet, dass der Außendurchmesser mit großer Genauigkeit 20 mm entspricht, kann ein Betongewinde mit einem "Nenndurchmesser" von 20 mm durchaus um rund 1 mm von diesem Wert abweichen. Gleichwohl ist der "Nenndurchmesser" auch bei einem Betongewinde für den Fachmann eine gebräuchliche und ausreichend klare Angabe, an der er sich orientiert. Handelsübliche Betonschrauben werden daher unter Bezug auf einen solchen Nenndurchmesser vertrieben, der seinerseits auf eine bestimmte Bohrlochgröße abgestimmt ist (beispielsweise ist eine Betonschraube mit einem Nenndurchmesser von 20 mm auf eine Bohrlochgröße von 18 mm abgestimmt).

In alternativen Ausführungsformen ist das metrische Gewinde ein UNF Gewinde nach ANSI B1.1, dessen Nenndurchmesser ≥ 9/16" ist. Man beachte dass im Sinne der vorliegenden Offenbarung somit auch ein UNF Gewinde nach ANSI B1.1 als "metrisches Gewinde" aufgefasst wird.

Erfindungsgemäß wird der erste Abschnitt vor dem Walzen des Verankerungsgewindes nicht reduziert. Dabei kommt also kein gestufter Rohling zum Einsatz, wie er in Fig. 1b gezeigt ist, sondern ein zylindrischer Rohling, bei dem der Durchmesser im ersten Abschnitt 20 und im zweiten Abschnitt 22 gleich ist. Während der Fachmann bislang davon ausgeht, dass er den ersten Abschnitt 20 an den Walzdurchmesser des Verankerungsgewindes anpassen muss, also kleiner wählen muss als den Walzdurchmesser für das metrische Gewinde 14 im zweiten Abschnitt 22, hat der Erfinder erkannt, dass dies vermieden werden kann, wenn nur der Querschnitt des Verankerungsgewindes 12 geschickt gewählt ist, nämlich so, dass beim Walzen ausreichend viel Material in das Gewinde transportiert wird, um - auch ohne vorherige Reduktion - einen genügend schlanken Kerndurchmesser zu erreichen. Auf diese Weise kann somit der zusätzliche Arbeitsschritt des Reduzierens, das heißt der Schritt zwischen den Fertigungsstadien von Fig. 1a und Fig. 1b, eingespart werden.

Für den Fachmann ist es überraschend, dass ein Schraubanker mit metrischem Anschlussgewinde in der Tat ohne vorherige Reduktion des ersten Abschnitts 20 des Rohlings 18 herstellbar ist.

Die Erfindung entfaltet eine besondere Synergiewirkung in der oben beschriebenen Weiterbildung, die die Verwendung eines vergleichsweise hochkoligen Rohlings betrifft, weil die im Zusammenhang mit Fig. 1 beschriebene Reduktion umso schwieriger zu bewerkstelligen ist, je härter das Ausgangsmaterial des Rohlings 18 ist. Um den Durchmesser eines Rohlings mit einem Kohlenstoffgehalt von mehr als 0,5 %, oder gar mehr als 0,6 % durch Kaltumformung zu reduzieren, werden enorm hohe Kräfte benötigt, die zu einem erheblichen Verschleiß der Werkzeuge führen. Falls die Reduktion durch ein spanendes Verfahren durchgeführt wird, ist aufgrund der vergleichsweise hohen Härte ebenfalls ein erheblicher Verschleiß zu erwarten. Insofern erweist es sich als außerordentlich vorteilhaft, wenn auf eine Reduktion des Rohlings verzichtet werden kann. Der Erfinder konnte bestätigen, dass sich auch bei einem erhöhten Kohlenstoffgehalt von mehr als 0,5 %, und auch von mehr als 0,6 % das Verankerungsgewinde 12 immer noch Walzen lässt.

Erfindungsgemäß hat das Verankerungsgewinde in einem radial äußeren Bereich einen ersten Flankenwinkel und in einem radial inneren Bereich einen zweiten Flankenwinkel, wobei der zweite Flankenwinkel größer als der erste Flankenwinkel ist. Auf diese Weise kann die Querschnittsfläche des Gewindes im Vergleich zu üblichen Gewinden vergrößert werden, oder - mit anderen Worten - beim Walzen mehr Material in das Gewinde verbracht werden, ohne dass das ein Drehmoment wesentlich zunimmt. Die Höhe des radial inneren Gewindeabschnitts beträgt dabei in bevorzugten Ausführungsformen zwischen 0,35 und 0,7 mm.

Erfindungsgemäß hat das Verankerungsgewinde 12 einen Spitzenradius von mindestens 0,15 mm, vorzugsweise von mindestens 0,18 mm und besonders vorzugsweise von mindestens 0,2 mm. Ein derartiger, vergleichsweise großer Spitzenradius hat den Effekt, dass der Gewindequerschnitt bei gleichbleibender Höhe und gleichbleibenden Flankenwinkel verbreitert werden kann, wodurch ebenfalls mehr Material in dem Gewinde untergebracht werden kann.

Zusätzlich oder alternativ kann das Verankerungsgewinde eine vergleichsweise große Höhe haben, wodurch ebenfalls mehr Material in dem Gewinde untergebracht werden kann. Konkret hat das Verankerungsgewinde in erfindungsgemäßen Ausführungsformen:
□ bei einem Nenndurchmesser von 14 mm oder UNF 9/16" eine Höhe von mindestens 1,8 mm, vorzugweise von mindestens 1,9 mm,
□ bei einem Nenndurchmesser von 16 mm oder UNF 5/8" eine Höhe von mindestens 1,9mm, vorzugweise von mindestens 2,05 mm,
□ bei einem Nenndurchmesser von 20 mm oder UNF 3/4" eine Höhe von mindestens 2,0 mm, vorzugweise von mindestens 2,15 mm,
□ bei einem Nenndurchmesser von 24 mm oder UNF 7/8" eine Höhe von mindestens 2,0 mm, vorzugweise von mindestens 2,2 mm,
□ bei einem Nenndurchmesser von ≥ 30 mm oder UNF 11/8" eine Höhe von mindestens 2,2 mm, vorzugweise von mindestens 2,5 mm.

In einer bevorzugten Ausführungsform ist der zweite Flankenwinkel um einen Faktor von mindestens 1,5, vorzugsweise von mindestens 1,8 und besonders vorzugweise von mindestens 2 größer als der erste Flankenwinkel.

Für den Fachmann versteht es sich, dass der Mittelwert des Eindrehmoments sich tendenziell vergrößert, wenn der Flankenquerschnitt auf eine oder mehrere der oben beschriebenen Arten vergrößert wird. Der Erfinder hat jedoch überraschend festgestellt, dass eine derartige Vergrößerung des Flankenquerschnitts zwar in der Tat zu einer Erhöhung des Mittelwerts des Eindrehmoments führt, der 95%-Fraktilwert des Eindrehmoments sich aber beispielsweise nicht notwendigerweise erhöht, sondern im Gegenteil sogar geringer war als bei Verankerungsgewinden aus dem Stand der Technik mit geringerem Flankenquerschnitt. Der Erfinder vermutet als Erklärung, dass schlankere Verankerungsgewinde eher dazu neigen, beim Eindrehen einzubrechen, wodurch dann das Eindrehmoment besonders stark erhöht wird. Dieses Risiko ist bei den hier vorgeschlagenen, voluminöseren Verankerungsgewinden offensichtlich deutlich geringer, was zu einer Verringerung des 95 %-Fraktilwerts führt.

### KURZBESCHREIBUNG DER FIGUREN

- Figur 1a-1e: zeigt eine Folge von Fertigungsstadien bei der Herstellung eines Schraubankers mit metrischem Anschlussgewinde gemäß dem Stand der Technik.
- Figur 2a-2c: zeigt eine Folge von Fertigungsstadien bei der Herstellung eines Schraubankers mit metrischem Anschlussgewinde nach einer Ausführungsform der Erfindung.
- Figur 3a: zeigt eine Querschnittsansicht eines Verankerungsgewindes aus dem Stand der Technik.
- Figuren 3b/c: zeigen Querschnittsansichten eines Verankerungsgewindes nach Ausführungsformen der Erfindung.

### BESCHREIBUNG DER BEVORZUGTEN AUSFÜHRUNGSFORM

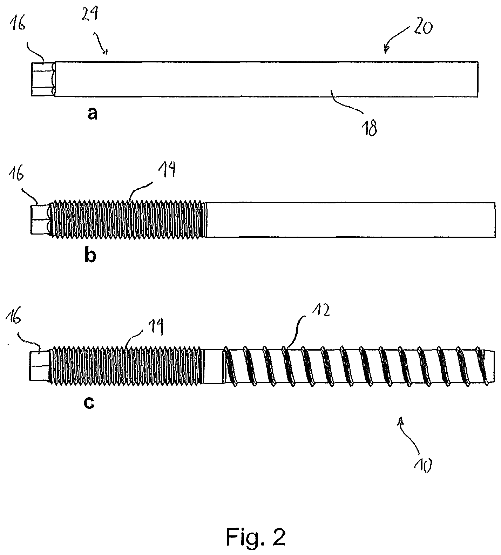

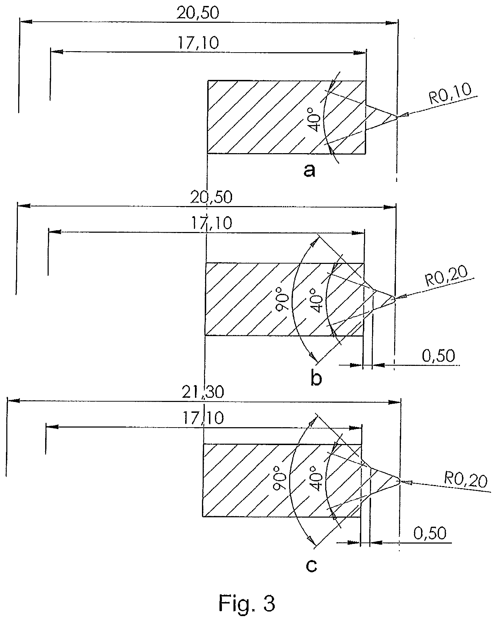

Fig. 3 zeigt eine Folge von Fertigungsstadien bei der Herstellung eines Schraubankers 10 mit metrischem Anschlussgewinde nach einer bevorzugten Ausführungsform der Erfindung. In dem gezeigten Ausführungsbeispiel wird ein zylindrischer Rohling 18 aus Stahl mit einem Kohlenstoffgehalt von mehr als 0,6 %, der sogenannten C-Güte, verwendet. Der zylindrische Rohling 18 hat einen ersten Abschnitt 20, in dem ein Verankerungsgewinde 12 (siehe Fig. 2c) auszubilden ist, und einen zweiten Abschnitt 22, in dem ein metrisches Gewinde 14 (siehe Fig. 2b) auszubilden ist. Da der zylindrische Rohling 18 aber einen gleichförmigen Durchmesser hat, sind der erste der zweite Abschnitt 20,22 durch keine strukturellen Merkmale voneinander unterschieden, sondern zunächst lediglich virtuelle Abschnitte des selben zylindrischen Rohlings 18.

Als erstes wird auf einer CNC-Maschine (nicht gezeigt) der Kraftangriff 16 durch Polygondrehen, im gezeigten Ausführungsbeispiel durch sogenanntes Sechskantschlagen ausgebildet. Der zylindrische Rohling 18 mit daran ausgebildeten Kraftangriff 16 ist in Fig. 2a gezeigt. Auf derselben CNC Maschine wird dann das metrische Gewinde 14 durch Rollen ausgebildet (Fig. 2b). Man beachte, dass die Reihenfolge nicht zwingend ist, sondern dass abweichend von der in Fig. 2 dargestellten Reihenfolge zuerst das metrische Gewinde 14 gerollt und dann der Kraftangriff 16 ausgebildet werden kann. Man beachte ferner, dass die Reihenfolge, in der bestimmte Verfahrensschritte in der Beschreibung oder den Ansprüchen genannt werden, nicht suggerieren sollen, dass sie auch tatsächlich in der Reihenfolge ausgeführt werden, wenn eine andere Reihenfolge technisch möglich ist, ohne dass darauf ausdrücklich hingewiesen wird.

Es ist von besonderem Vorteil, dass bei der Ausführungsform der Erfindung der Kraftangriff 16 und das metrische Gewinde 14 auf derselben CNC-Maschine quasi in einem Zug ausgebildet werden können. Dadurch lässt sich ein außerordentlich hoher Durchsatz mit vergleichsweise moderatem Maschinenaufwand erzielen. Wie eingangs erwähnt wurde, ist es mit steigender Länge der Schraubanker 10 zunehmend schwierig, den Kraftangriff 16 effizient, d.h. mit hohem Durchsatz durch Kaltumformung auszubilden, weil für längere Stückgrößen sehr große, langhubige Pressen zum Einsatz kommen müssen, in denen die Werkstücke mit ihrer gesamten Länge aufgenommen werden.

Danach wird in dem ersten Abschnitt 20 das Verankerungsgewinde 12 durch Walzen ausgebildet (Fig. 2c). Wie man durch Vergleich der Fig. 2c mit der Fig. 1e erkennen kann, ist das Verankerungsgewinde 12 bei dem erfindungsgemäßen Schraubankers (Fig. 2c) voluminöser als das Verankerungsgewinde 12 des herkömmlichen Schraubankers (Fig. 1e). Dies bedeutet, dass beim Walzen mehr Material in das Gewinde verbracht wird, und somit der Kerndurchmesser im ersten Abschnitt 20 durch das Walzen selbst abnimmt. Auf diese Weise kann ein ausreichend geringer Kerndurchmesser erreicht werden, ohne dass der Rohling 18 zuvor in einem separaten Schritt im ersten Abschnitt 20 reduziert werden müsste, wie dies in Fig. 1a/1b der Fall ist.

Da der Rohling 18 bei dem Verfahren von Fig. 2 in bevorzugten Ausführungsformen bereits einen vergleichsweise hohen Kohlenstoffgehalt von mehr als 0,6 % hat, kann auf eine weitere Wärmebehandlung und Härtung des ersten Abschnitts 20 als Ganzes, beispielsweise Einsatzhärtung, verzichtet werden. Stattdessen wird lediglich das führende Ende des Verankerungsgewindes 12 durch Induktionshärten gehärtet, im gezeigten Ausführungsbeispiel auf eine Härte von mehr als 60 HRC. Dieses Induktionshärten an der Spitze lässt sich vergleichsweise schnell und kostengünstig durchführen.

Unter Bezugnahme auf Fig. 3 werden bevorzugte Formen des Verankerungsgewindes 12 unter Bezugnahme auf lediglich beispielhafte, aber zu Zwecken Illustration konkret angegebene Abmessungen erläutert. Fig. 3a zeigt einen Abschnitt eines Längsschnittes einer herkömmlichen Betonschraube mit einem Nenndurchmesser von 20 mm, in dem rechts der Gewindequerschnitt, d.h. der Querschnitt eines Gewindeganges, zu sehen ist. Wie der Fig. 3a zu entnehmen ist, beträgt der tatsächliche Außendurchmesser des Gewindes 20,50 mm, und der Kerndurchmesser der Betonschraube beträgt 17,10 mm. Das Gewinde hat einen Flankenwinkel von 40° und einen Spitzenradius von 0,1 mm. Die Höhe des Gewindes, d.h. der radiale Abstand zwischen der Gewindespitze und dem Kern der Schraube, beträgt (20,50 - 17,10):2 = 1,7 mm. Der Gewindegang hat somit eine Querschnittsfläche von 1,29 mm².

Fig. 3b zeigt den Querschnitt eines modifizierten Gewindes, das sich von dem Gewinde von Fig. 3a in zweierlei Hinsicht unterscheidet. Zum einen ist der Spitzenradius mit 0,2 mm höher als bei dem herkömmlichen Gewinde von Fig. 3a. Die Erhöhung des Spitzenradius um 0,1mm führt - bei gleicher Höhe und gleichem Flankenwinkel - zu einer Verbreiterung des Gewindequerschnitts um 0,2 mm. Zum anderen hat das Gewinde im Querschnitt einen radial äußeren Bereich mit demselben Flankenwinkel von 40° wie das Gewinde von Fig. 3a, zusätzlich aber einen radial inneren Bereich mit einem größeren Flankenwinkel, im gezeigten Ausführungsbeispiel von 90°. Im gezeigten Ausführung Beispiel hat dieser radial innere Bereich eine Höhe von 0,5 mm. In anderen Ausführungsbeispielen kann die Höhe des radial inneren Bereichs zwischen 0,35 und 0,7 mm liegen. Aufgrund dieses erhöhten Flankenwinkels im radial inneren Bereich vergrößert sich die Querschnittsfläche des Gewindegangs weiter, im konkret gezeigten Ausführungsbeispiel auf eine Fläche von 1,68 mm².

Fig. 3c zeigt den Querschnitt eines weiteren modifizierten Gewindes, das ähnlich wie das Gewinde von Fig. 3b einen vergrößerten Spitzenradius von 0,2 mm und einen radial inneren Bereich mit einem vergrößerten Flankenwinkel von 90° aufweist. Zusätzlich ist aber auch die Höhe des Gewindes vergrößert, nämlich auf (21,30 - 17,10):2=2,1 mm. Auf diese Weise kann die Querschnittsfläche des Gewindegangs weiter erhöht werden, im konkret gezeigten Ausführungsbeispiel auf 2,35 mm².

### Bezugszeichenliste

- 10: Schraubanker
- 12: Verankerungsgewinde
- 14: metrisches Anschlussgewinde
- 16: Kraftangriff
- 18: Rohling
- 20: erster Abschnitt
- 22: zweiter Abschnitt

## Patentansprüche

1. Verfahren zur Herstellung eines Schraubankers (10), der
- ein Verankerungsgewinde (12), welches zum direkten Einschrauben in Beton, Stein oder Mauerwerk geeignet ist,
- ein metrisches Anschlussgewinde (14) und
- einen Kraftangriff (16) umfasst,
mit den folgenden Schritten:
- Bereitstellen eines Rohlings (18) mit einem ersten Abschnitt (20), an dem das Verankerungsgewinde (12) auszubilden ist, und einem zweiten Abschnitt (22), an dem das metrische Anschlussgewinde (14) auszubilden ist,
- Ausbilden des Kraftangriffs (16),
- Ausbilden des metrischen Gewindes (14) durch Walzen oder Rollen, und
- Ausbilden des Verankerungsgewindes (12) durch Walzen,
wobei der erste Abschnitt (20) vor dem Walzen des Verankerungsgewindes (12) nicht reduziert wird, und wobei das Verankerungsgewinde (12) eine oder mehrere der folgenden Eigenschaften aufweist:
- das Verankerungsgewinde (12) hat in einem radial äußeren Bereich einen ersten Flankenwinkel und in einem radial inneren Bereich einen zweiten Flankenwinkel, wobei der zweite Flankenwinkel größer als der erste Flankenwinkel ist,
- das Verankerungsgewinde (12) hat einen Spitzenradius von mindestens 0,15 mm, vorzugsweise von mindestens 0,18 mm und besonders vorzugsweise von mindestens 0,2 mm,
- das Verankerungsgewinde (12) hat
• bei einem Nenndurchmesser von 14 mm oder UNF 9/16" eine Höhe von mindestens 1,8 mm, vorzugweise von mindestens 1,9 mm,
• bei einem Nenndurchmesser von 16 mm oder UNF 5/8" eine Höhe von mindestens 1,9 mm, vorzugweise von mindestens 2,05 mm,
• bei einem Nenndurchmesser von 20 mm oder UNF 3/4" eine Höhe von mindestens 2,0 mm, vorzugweise von mindestens 2,15 mm,
• bei einem Nenndurchmesser von 24 mm oder UNF 7/8" eine Höhe von mindestens 2,0 mm, vorzugweise von mindestens 2,2 mm,
• bei einem Nenndurchmesser von ≥ 30 mm oder von ≥ UNF 11/8" eine Höhe von mindestens 2,2 mm, vorzugweise von mindestens 2,5 mm.

2. Verfahren nach Anspruch 1, bei dem der zweite Flankenwinkel um einen Faktor von mindestens 1,5, vorzugsweise von mindestens 1,8 und besonders vorzugweise von mindestens 2 größer ist als der erste Flankenwinkel, und/oder
bei dem der Rohling (18) einen Kohlenstoffgehalt von mindestens 0,5 %, vorzugsweise von mindestens 0,6 % aufweist.

3. Verfahren nach einem der Ansprüche 1 oder 2, bei dem der Kraftangriff (16) durch ein spanendes Verfahren, durch ein Fügeverfahren oder durch Warmumformung bei einer Temperatur von mindestens 300 °C, vorzugweise mindestens 350 °C und besonders vorzugweise mindestens 400 °C ausgebildet wird,
wobei der Kraftangriff (16) vorzugsweise durch Polygondrehen, insbesondere durch Sechskantschlagen ausgebildet wird.

4. Verfahren nach einem der Ansprüche 1 bis 3, bei dem der erste Abschnitt (20) nach dem Walzen des Verankerungsgewindes (12) nicht gehärtet und angelassen wird.

5. Verfahren nach einem der 1 bis 4, bei dem der erste Abschnitt (20) nach dem Walzen des Verankerungsgewindes (12) nicht über seine gesamte Länge gehärtet wird, wobei
nach dem Walzen des Verankerungsgewindes (12) vorzugsweise ausschließlich das führende Ende des Verankerungsgewindes (12) gehärtet wird, insbesondere durch Induktionshärten, wobei im Bereich des führenden Endes des Verankerungsgewindes (12) vorzugsweise eine Härte von mindestens 60 HRC erreicht wird.

6. Verfahren nach einem der Ansprüche 1 bis 5, bei dem das metrische Gewinde (14) durch Rollen ausgebildet wird, und bei dem das Ausbilden des Kraftangriffs (16) und das Ausbilden des metrischen Gewindes (14) jeweils auf einer CNC-Maschine, vorzugsweise derselben CNC-Maschine ausgeführt wird, und/oder
wobei der Schraubanker (10) eine Länge von mindestens 200 mm, vorzugsweise von mindestens 250 mm und besonders vorzugsweise von mindestens 300 mm hat, und/oder
bei dem das metrische Gewinde einen Nenndurchmesser nach DIN 13 ≥ 14 mm hat, oder ein UNF Gewinde nach ANSI B1.1 mit einem Nenndurchmesser ≥ 9/16" ist.

## Claims

1. Method for producing a screw anchor (10), which comprises
- an anchoring thread (12), which is suitable for direct screwing into concrete, stone or masonry,
- a metric connection thread (14) and
- a drive (16),
having the following steps:
- providing a blank (18) with a first section (20), on which the anchoring thread (12) is to be formed, and a second section (22), on which the metric connection thread (14) is to be formed,
- forming the drive (16),
- forming the metric thread (14) by rolling, and
- forming the anchoring thread (12) by rolling,
wherein the first section (20) is not reduced before rolling the anchoring thread (12), and
wherein the anchoring thread (12) has one or more of the following properties:
- the anchoring thread (12) has a first flank angle in a radially outer region and a second flank angle in a radially inner region, wherein the second flank angle is larger than the first flank angle,
- the anchoring thread (12) has a tip radius of at least 0.15 mm, preferably of at least 0.18 mm and particularly preferably of at least 0.2 mm,
- the anchoring thread (12) has
• a height of at least 1.8 mm, preferably of at least 1.9 mm with a nominal diameter of 14 mm or UNF 9/16",
• a height of at least 1.9 mm, preferably of at least 2.05 mm with a nominal diameter of 16 mm or UNF 5/8",
• a height of at least 2.0 mm, preferably of at least 2.15 mm with a nominal diameter of 20 mm or UNF 3/4",
• a height of at least 2.0 mm, preferably of at least 2.2 mm with a nominal diameter of 24 mm or UNF 7/8",
• a height of at least 2.2 mm, preferably or at least 2.5 mm with a nominal diameter of ≥ 30 mm or ≥ UNF 11/8".

2. Method according to Claim 1, in which the second flank angle is greater than the first flank angle by a factor of at least 1.5, preferably of at least 1.8 and particularly preferably of at least 2, and/or
in which the blank (18) has a carbon content of at least 0.5%, preferably of at least 0.6%.

3. Method according to one of Claims 1 or 2, in which the drive (16) is formed by a machining process, by a joining process or by hot forming at a temperature of at least 300 °C, preferably at least 350 °C and particularly preferably at least 400 °C,
wherein the drive (16) is preferably formed by polygon turning, in particular by hexagonal hammering.

4. Method according to one of Claims 1 to 3, in which the first section (20) is not hardened and tempered after rolling the anchoring thread (12).

5. Method according to one of Claims 1 to 4, in which the first section (20) is not hardened over its entire length after rolling the anchoring thread (12), wherein
preferably only the leading end of the anchoring thread (12) is hardened after rolling the anchoring thread (12), in particular by induction hardening, wherein a hardness of at least 60 HRC is achieved in the region of the leading end of the anchoring thread (12).

6. Method according to one of Claims 1 to 5, in which the metric thread (14) is formed by rolling, and in which the formation of the drive (16) and formation of the metric thread (14) is respectively carried out on a CNC machine, preferably the same CNC machine, and/or
wherein the screw anchor (10) has a length of at least 200 mm, preferably of at least 250 mm and particularly preferably of at least 300 mm, and/or
in which the metric thread has a nominal diameter according to DIN 13 ≥ 14, or is a UNF thread according to ANSI B1.1 with a nominal diameter ≥ 9/16".

## Revendications

1. Procédé de fabrication d'une ancre à visser (10) qui comprend
- un filetage d'encrage (12) qui est conçu pour un vissage direct dans le béton, la pierre ou un ouvrage de maçonnerie,
- un filetage de raccordement métrique (14) et
- un point d'application de force (16),
avec les étapes suivantes :
- mise à disposition d'une ébauche (18) avec une première portion (20), au niveau de laquelle le filetage d'ancrage (12) doit être réalisé, et une deuxième portion (22), au niveau de laquelle le filetage de raccordement métrique (14) doit être réalisé,
- réalisation du point d'application de force (16),
- réalisation du filetage métrique (14) par laminage ou roulage et
- réalisation du filetage d'ancrage (12) par laminage,
dans lequel la première portion (20) n'est pas réduit avant le laminage du filetage d'ancrage (12) et dans lequel le filetage d'ancrage (12) comprend une ou plusieurs des propriétés suivantes :
- le filetage d'ancrage (12) présente, dans une zone externe radialement, un premier angle de flanc et, dans une zone interne radialement, un deuxième angle de flanc, dans lequel le deuxième angle de flanc est supérieur au premier angle de flanc,
- le filetage d'ancrage (12) présente un rayon de pointe de 0,15 mm minimum, de préférence de 0,18 mm minimum et plus particulièrement de préférence de 0,2 mm minimum,
- le filetage d'ancrage (12) présente
• dans le cas d'un diamètre nominal de 14 mm ou UNF 9/16", une hauteur de 1,8 mm minimum, de préférence de 1,9 mm minimum,
• dans le cas d'un diamètre nominal de 16 mm ou UNF 5/8", une hauteur de 1,9 mm minimum, de préférence de 2,05 mm minimum,
• dans le cas d'un diamètre nominal de 20 mm ou UNF 3/4", une hauteur de 2,0 mm minimum, de préférence de 2,15 mm minimum,
• dans le cas d'un diamètre nominal de 24 mm ou UNF 7/8", une hauteur de 2,0 mm minimum, de préférence de 2,2 mm minimum,
• dans le cas d'un diamètre nominal ≥ 30 mm ou UNF 11/8", une hauteur de 2,2 mm minimum, de préférence de 2,5 mm minimum.

2. Procédé selon la revendication 1, dans lequel le deuxième angle de flanc est supérieur d'un facteur de 1,5 minimum, de préférence de 1,8 minimum et plus particulièrement de préférence de 2 minimum au premier angle de flanc et/ou
dans lequel l'ébauche (18) présente une teneur en carbone de 0,5 % minimum, de préférence de 0,6 % minimum.

3. Procédé selon l'une des revendications 1 ou 2, dans lequel le point d'application de force (16) est réalisé à l'aide d'un procédé d'enlèvement de copeaux, d'un procédé d'assemblage ou par façonnage thermique à une température de 300 °C minimum, de préférence de 350 °C minimum et plus particulièrement de préférence de 400 °C minimum, dans lequel le point d'application de force (16) est réalisé de préférence par tournage polygonal, plus particulièrement par frappe de six pans.

4. Procédé selon l'une des revendications 1 à 3, dans lequel la première portion (20) n'est pas durcie après le laminage du filetage d'ancrage (12) et est recuite.

5. Procédé selon l'une des revendications 1 à 4, dans lequel la première portion (20) n'est pas durcie sur toute sa longueur après le laminage du filetage d'ancrage (12), dans lequel après le laminage du filetage d'ancrage (12), de préférence exclusivement l'extrémité de guidage du filetage d'ancrage (12) est durcie, plus particulièrement par durcissement par induction, dans lequel, au niveau de l'extrémité de guidage du filetage d'ancrage (12), une dureté de préférence de 60 HRC minimum est atteinte.

6. Procédé selon l'une des revendications 1 à 5, dans lequel le filetage métrique (14) est réalisé par roulage et dans lequel la réalisation du point d'application de force (16) et la réalisation du filetage métrique (14) sont effectuées chacune sur une machine CNC, de préférence la même machine CNC et/ou
dans lequel l'ancre à visser (10) présente une longueur de 200 mm minimum, de préférence de 250 mm minimum et plus particulièrement de préférence de 300 mm minimum et/ou
dans lequel le filetage métrique présente un diamètre nominal selon DIN 13 ≥ 14 mm ou est un filetage UNF selon ANSI B1.1 avec un diamètre nominal ≥ 9/16".
